(19) **Europäisches Patentamt / European Patent Office / Office européen des brevets**

(11) **EP 4 059 884 A1**

(12) # EUROPEAN PATENT APPLICATION
published in accordance with Art. 153(4) EPC

(43) Date of publication:
**21.09.2022 Bulletin 2022/38**

(21) Application number: **20888249.8**

(22) Date of filing: **21.10.2020**

(51) International Patent Classification (IPC):
**C01B 17/52** (2006.01)    **C22B 1/10** (2006.01)
**C22B 15/00** (2006.01)

(52) Cooperative Patent Classification (CPC):
**C01B 17/52; C22B 1/10; C22B 5/00; C22B 15/00;**
Y02P 10/20

(86) International application number:
**PCT/CL2020/050139**

(87) International publication number:
**WO 2021/092706 (20.05.2021 Gazette 2021/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2019 CL 20193246**

(71) Applicant: **Universidad De Concepcion Concepción (CL)**

(72) Inventors:
• **WILKOMIRSKY FUICA, Igor**
Concepción (CL)
• **PARADA LUNA, Fernando Antonio**
Concepción (CL)
• **BALLADARES VARELA, Eduardo**
Concepción (CL)
• **PARRA FIGUEROA, Roberto**
Concepción (CL)

(74) Representative: **Clarke Modet & Co.**
C/ Suero de Quiñones 34-36
28002 Madrid (ES)

(54) **METHOD FOR PRODUCING COPPER METAL FROM COPPER CONCENTRATES WITHOUT GENERATING WASTE**

(57)    The invention relates to a method for producing copper metal from copper concentrates without generating waste, which comprises: (a) oxidizing copper concentrate; (b) cleaning and cooling the gases; (c) feeding to a reduction reactor; (d) cleaning the gases; (e) discharging hot powders and calcines into water; (f) performing magnetic separation; (g) thickening and filtering the magnetic fraction; (h) floating silica and inert materials; (i) thickening and filtering the silica and inert materials; (j) thickening and filtering the final concentrate containing the copper metal and noble metals; (k) smelting the final concentrate of copper and noble metals; and (l) recirculating ground smelt slag to a roasting reactor.

EP 4 059 884 A1

**Description**

**Technical Area**

The technology is oriented to the mining area, more particularly, corresponds to a process to produce copper metal from copper concentrates without generating waste.

**Prior Art**

For more than 100 years, blister copper production technology has remained virtually stagnant, and while it has allowed the production of blister copper at a competitive price until 1 or 2 decades ago, its intrinsic limitations due to the inevitable leakage of gases with sulfur dioxide ($SO_2$) and the formation of a large quantity of slags, make it necessary to have radically different alternatives not only in terms of capital costs and operation of the plants, but also in their potential degree of automation, zero emissions of gases into the environment, generation of slags and recovery of other metals contained in the copper concentrates, that is, a "zero waste" process for the 21 st century.

Although some more advanced fusion/conversion technologies have emerged such as the Outokumpu-Kennecott, Mitsubishi and Ausmelt, they all generate between 0,8 to 1,2 tons of slag per ton of blister copper generated, and the global capture of sulfur as $SO_2$ even with the best technology does not exceed 98%. In addition, only copper and noble metals are recovered from the copper concentrate, discarding others of commercial value contained in the concentrates such as molybdenum, zinc, and iron.

Chile, which is the largest copper producer in the world, has only made a significant contribution to the copper smelting technology with the Lieutenant Converter (CT), which is already more than half a century old, and there is no new technology in development that exceeds the limitations of the current ones.

Fugitive emissions of gases containing $SO_2$ into the environment, as well as the generation of slag in all copper concentrate smelting processes are two widespread problems. The slag contains between 2 to 10% copper and must be reprocessed, and still end up with 0.5 - 0.8% copper and other metals of commercial value that represent an environmental liability of great magnitude. In Chile it is estimated that there are about 50 million tons of slag in the dumps, and that they also contain about 2 million tons of copper, already unrecoverable.

On the other hand, the new Chilean environmental legislation capturing 95% of $SO_2$ (D.S. No,28/2013, of the MMA, published on December 12, 2013) which entered into force in 2019 and future of 98% can make several of the Chilean smelters technically and economically unviable, which would bring Chile back to a country that only produces concentrates, which predicts a future complex for the seven Chilean copper smelters.

There is no combined process to date, being the only technology developed by the company AMAX Inc. of the United States[1] in which copper concentrates are roasted (oxidized) with air at 880°C up to low 1% sulfur and then the calcine is pelletized with coal or coke to reduce it and smelt at 1200 - 1300°C in an open hearth, cupola or rotary kiln. As can be seen, in this patent the calcine must be smelted to reduce it, forming a large amount of slag with 6 to 12% of copper, since nothing of the iron is previously eliminated. The process was tested on a demonstration scale and not industrially applied, possibly due to this limitation.

Reductive roasting from hematite ($Fe_2O_3$) to magnetite ($Fe_3O_4$) has been commercially used for several decades [2][3] for iron minerals containing low-grade hematite that cannot be concentrated, so that by transforming the hematite into magnetite it can be easily concentrated in magnetic form, so that it is an established technology for hematitic iron minerals.

Based on this background, there is still a need to develop new technologies to produce copper metal from copper concentrates that are efficient and environmentally friendly.

**Brief description of the drawings**

Figure 1: Schematic of the process for producing copper metal from copper concentrates.
Figure 2: Graph of Standard free energy of reaction of mineral compounds.
Figure 3: Quaternary phase stability diagram Cu-Fe-S-O at 800°C (Cu/Fe = 2/1).
Figure 4: Diagram of the standard free energies of reduction reaction with carbon monoxide and with hydrogen.
Figure 5: Diagram of Quaternary phase stability Cu-Fe-C-O at 700°C.
Figure 6: Process diagram of a technological alternative with a fluidized bed reactor.
Figure 7: Diagram of Phase stability Cu-Fe-$H_2$-$O_2$ at 700°C.
Figure 8: Process diagram of a technological alternative using hydrogen.

## Disclosure of the Invention

(1) "H.P. Rajcevic, W.R. Opie and D.C. Cusanelli, *"Production of blister Copper from calcined Copper-iron concentrates"*, U.S. Pat. 4,072,507, (Feb. 7, 1978).

(2) Wade H.H. and Schulz, N.F., "Magnetic roasting of iron ones", Min. Engr., No. 11, p. 1161-1165, (1960).

(3) G. Uwadiale, "Magnetizing roasting of iron ores", Min. Processes and Extr. Metallurgy Review, Vol. 11, Nos. 1 and 2, p. 68-70, (1992).

The present technology corresponds to a process for producing copper metal from copper concentrates without generating waste. Unlike conventional casting processes, in this invention the melting temperature of the materials is not reached, since it is operated at a temperature at which reactions occur between solids and gases, and not between molten materials.

The process comprises two main and two secondary stages. In the first main stage, the copper concentrate is oxidized (roasted) with air in an environmentally closed system that virtually removes the entire sulfur as $SO_2$ to produce sulfuric acid, leaving a virtually sulfur-free oxidized calcine where the copper, iron and other metals are transformed to their respective more stable oxides.

In the second main stage, the oxidized calcine is reduced to copper metal and magnetite in a second reactor at 500 - 950°C using coal, carbon monoxide or hydrogen as reducers, to finally separate the copper from the iron in magnetic form and then the sterile one (mainly silica), in order to obtain a final product of copper metal and noble metals to be melted and electrolytically refined in conventional form, also recovering the iron as a concentrate of magnetite, silica, zinc and molybdenum (if any in the initial concentrate), all as commercial products.

In this way, and unlike the conventional smelting processes currently in use, no slag is generated, nor fugitive gases with $SO_2$, therefore all the metals contained in the fed copper concentrate are recovered.

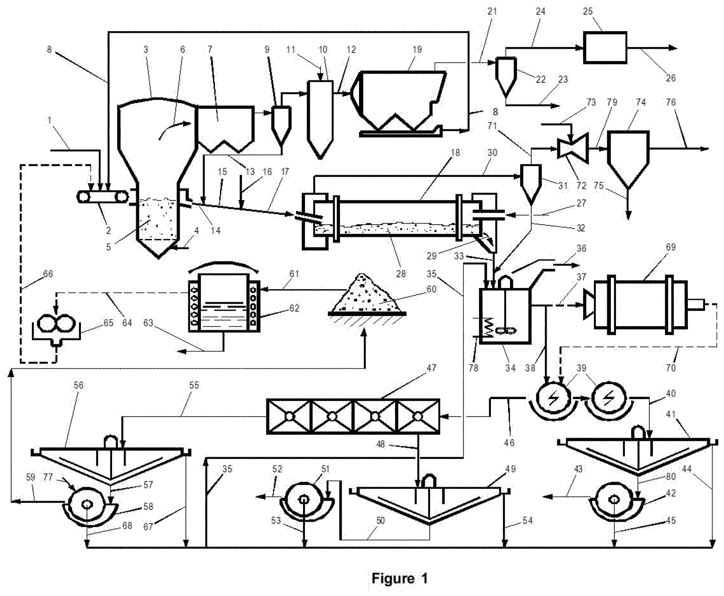

For a better understanding of this invention, a detailed description of the process will be made below, referring to Figures 1 - 8.

In Figure 1, a dry or wet copper concentrate **1** with up to 12% humidity is fed by a conventional system **2** to a conventional fluidized bed roasting reactor **3,** which operates between 650 to 900°C, preferably between 700 to 850°C using air **4** or oxygen-enriched air so that the following reactions occur in the fluidized bed **5** for a typical copper concentrate containing chalcopyrite ($CuFeS_2$), covelite ($CuS$), chalcocite ($Cu_2S$) and pyrite ($FeS_2$):

$$CuFeS_{2(s)} + 3{,}25O_{2(g} = CuO_{(s)} + 0{,}5Fe_2O_{3(s)} + 2SO_{2(g)} \qquad (1)$$

$$CuS_{(s)} + 1{,}5O_{2(g)} = CuO_{(s)} + SO_{2(s)} \qquad (2)$$

$$Cu_2S_{(s)} + 2O_{2(g)} = 2CuO_{(s)} + SO_{2(g)} \qquad (3)$$

$$FeS_{2(s)} + 2{,}75O_{2(g)} = 0{,}5Fe_2O_{3(s)} + 2SO_{2(g)} \qquad (4)$$

$$CuO(s) + Fe_2O_{3(s)} = CuO \cdot Fe_2O_{3(s)} \qquad (5)$$

The extent to which reaction (5) of cupric ferrite formation ($CuO \cdot Fe_2O_3$) occurs is variable and depends on the reaction temperature and time. At 800°C, about 15% of the copper contained in the concentrate forms copper ferrite.

The reaction time in reactor **3** ranges between 2 to 12 h, preferably between 4 to 8 h, using air or oxygen-enriched air between 21 to 100% by volume of oxygen and an excess of air (oxygen) employed with respect to the stoichiometric required by reactions (1) to (4), which ranges from 0.001 to 200%, preferably between 50 and 100% excess.

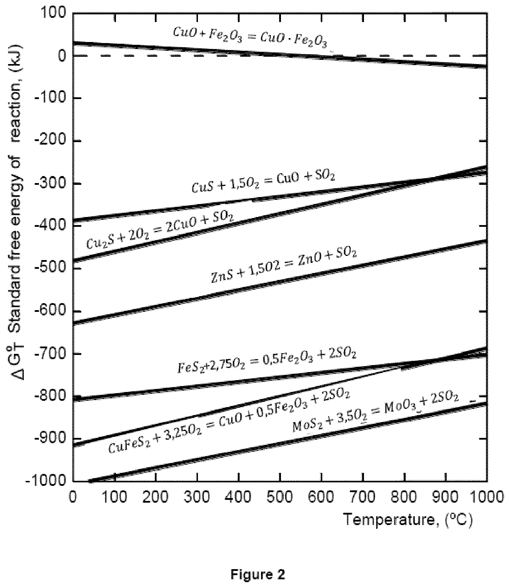

All these reactions are spontaneous with negative values (by convention) of their standard reaction free energies as seen in Figure 2, where the values of the standard reaction free energies with oxygen of mineral compounds generally present in copper concentrates as a function of the reaction temperature are plotted.

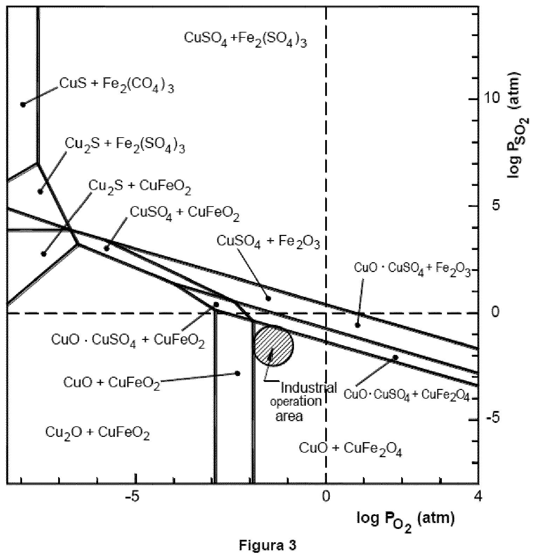

Figure 3 shows the diagram of quaternary phase stability Cu-Fe-S-O at 800°C under chemical equilibrium conditions as a function on the partial pressures of oxygen (air) and sulfur dioxide ($SO_2$) for the reactions that occur in the fluidized bed **5,** where the stability area of the copper and iron compounds formed in the calcine can be observed under the operating conditions of an industrial reactor.

If the concentrate contains zinc, for example, as sphalerite ($ZnS$), it is oxidized to ZnO according to the reaction:

$$ZnS_{(s)} + 1,5O_{2(g)} = ZnO_{(s)} + SO_{2(g)} \qquad (6)$$

If the concentrate contains molybdenum as molybdenite ($MoS_2$), it is oxidized to trioxide ($MoO_3$) which is volatile at about 650°C and then condenses with the powders of the electrostatic precipitator, from where it can be recovered by leaching the powders in conventional form, for example, with a solution of ammonium hydroxide to then precipitate the ammonium molybdate, this being a commercial product.

The oxidation reaction occurring in the roasting reactor is as follows:

$$MoS_{2(s)} + 3,5O_{2(g)} = MoO_{3(g)} + 2SO_{2(g)} \qquad (7)$$

All these reactions are exothermic, that is, they generate heat so that the reactor **3** does not require additional heat, furthermore, its hot gases **6** pass to a conventional boiler **7** to recover some of the heat as high-pressure steam for industrial use.

The sulfur contained in the copper concentrate **1** fed to the reactor **3,** and where over 99% of it is oxidized to sulfur dioxide ($SO_2$), leaves the reactor with the gases **6,** which after cooling to 400 - 450°C in the boiler **7** are cleaned in conventional cyclones **9,** and then again cooled to 300 - 320°C in a conventional evaporative chamber **10** using sprayed water **11.** The exhaust gases **12** end up being cleaned in a conventional electrostatic precipitator **19.** The powder **8** of the electrostatic precipitator can be returned to the reactor **3** and the cleaned gases **21** are washed in a conventional gas washer **22.**

If the initial copper concentrate 1 contains arsenic, it can be precipitated from the effluent **23** of the gas washer **22** in conventional form, for example, as ferric arsenate (scorodite). The clean gases **24** eventually go to a conventional acid plant **25** to produce sulfuric acid **26** for sale.

The oxidized calcine containing essentially cupric oxide (CuO), hematite ($Fe_2O_3$), cupric ferrite ($CuO \cdot Fe_2O_3$), zinc oxide (ZnO), silica ($SiO_2$) and other sterile such as silicates, hot discharge **14** of the roasting reactor **3** and together with the powders **13** generated in the boiler **7** and in the cyclones **9, 15** are joined to feed **17** the calcine reduction reactor **18,** adding a reduction agent **16** such as coal, coke coal or carbon monoxide (CO) in an amount between 0,001 to 200% excess of the stoichiometric required to carry out reactions (8) to (11), preferably between 0,001 to 100% excess. Where the carbon monoxide (CO) gas is generated externally in a conventional carburetor and removing the sulfur, if any, in a conventional way in a limestone desulphurizer, ($CaCO_3$). Optionally, it can be carried out using gas containing hydrogen between 10 to 20% by volume, at a temperature between 600 to 950°C, preferably between 700 to 800°C.

The reduction reactor **18** may be a conventional one such as a rotary kiln, in which the charge **28** of calcines and reducer generate carbon monoxide (CO) to reduce the oxides of copper, iron and zinc (if any) according to the following reactions:

$$CuO_{(s)} + CO_{(g)} = Cu_{(s)} + CO_{2(g)} \qquad (8)$$

$$3Fe_2O_{3(s)} + CO_{(g)} = 2Fe_3O_{4(s)} + CO_{2(g)} \qquad (9)$$

$$3CuO \cdot Fe_2O_3 + 4CO_{(g)} = 3Cu_{(s)} + 2Fe_3O_{4(s)} + 4CO_{2(g)} \qquad (10)$$

$$ZnO_{(s)} + CO_{(g)} = Zn_{(g)} + CO_{2(g)} \qquad (11)$$

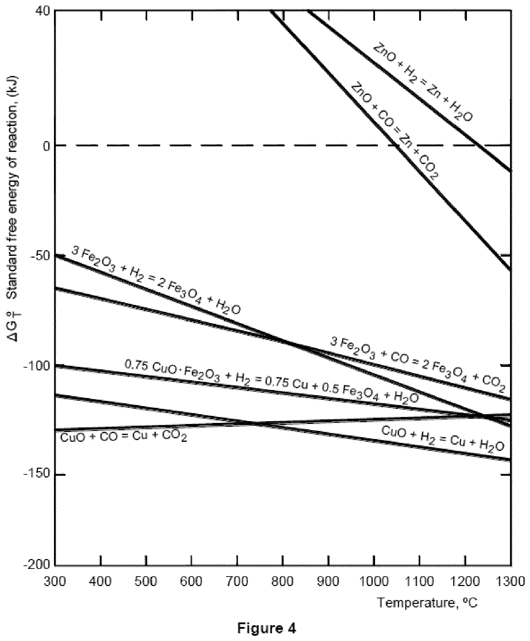

Figure 4 shows the diagram of the standard free energies of the reduction reactions with carbon monoxide (CO) as a function of temperature for reactions (8) to (11). It is observed that all reactions have a negative value of the standard free energy of reaction (spontaneous) between 300 - 1300°C, however, the reduction of zinc oxide (ZnO) to gaseous metal zinc with carbon monoxide (CO) requires a temperature higher than 1000°C.

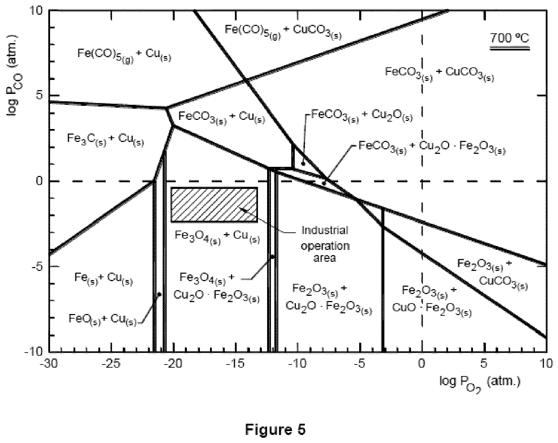

Figure 5 shows the diagram of quaternary phase stability Cu-Fe-C-O at 700°C as a function of the partial pressure of the reducer (CO) and the partial pressure of the oxygen in the gas phase, indicating the operating area of an industrial reduction reactor in which the metallic copper (Cu) and the ferrous-ferric oxide (magnetite) of iron ($Fe_3O_4$) are stable.

All reduction reactions (8) to (11) are exothermic, so that the reduction reactor **18** does not require additional heat to operate. The operating temperature of this reactor ranges between 500 to 950°C, preferably between 700 to 800°C with a reaction time between 2 to 6 h. If necessary, conventional fuel such as natural gas or oil **27** can be added to the reduction reactor **18.**

The exhaust gases **30** from the reduction reactor **18** are cleaned in one or more conventional cyclones **31.** The reduced calcine in the reactor **18** discharges **29** together with powders **32** separated into conventional cyclones **31** and the mixture **33** of calcines **29** and powders **32** discharges directly into a stirred pond with conventional water **34** operating at a liquid temperature between 20 to 60°C, where the violent thermal shock of the hot calcine and cold water results in the fracturing and release of any metallic copper particles trapped in the magnetite (generated by the reduction of the cupric ferrite, according to reaction (9)). The steam generated is continuously removed **36** from the stirred pond, which maintains the temperature of the water in the desired range by a conventional heat exchanger **78**. If required, the resulting pulp **37** may be wet ground in a conventional rod or ball mill **69** to complete the release of the copper metal from the magnetite.

If the copper concentrate contains zinc, to reduce zinc oxide to gaseous metal zinc it is required to operate the reduction reactor with a zone at temperature over 1000°C to produce the reduction reaction (11). In such a case, the gaseous zinc contained in the gas **71** generated in the reduction reactor **18** according to reaction (11) is re-oxidized with cold air **73** in a conventional gas mixer such as a Venturi **72**, where the gaseous zinc is oxidized according to the reaction:

$$2Zn_{(g)} + O_{2(g)} = 2ZnO_{(s)} \qquad (12)$$

The gases **79** containing fine zinc oxide are cleaned in a conventional equipment **74** such as a bag filter to recover zinc oxide for sale **75**. The clean gases **76** can be vented into the atmosphere.

The pulp of calcine and water generated **38** in the stirred pond **34** or generated in that of the mill **69** is brought **70** to a magnetic separation system in conventional wet drums **39** of one or more stages and with a field density between 18,000 to 20,000 Gauss in which the magnetite ($Fe_3O_4$), which is strongly ferromagnetic, is separated from the non-magnetic rest formed by particles of metallic copper, silica and other inert materials such as silicates and the noble metals that could accompany the copper concentrate. In this way, a high magnetite law concentrate **40** is obtained which is brought to a conventional thickening step **41**. The low flow of the thickener **80** is brought to a conventional filtering step **42** and the final check of magnetite concentrate **43** is sold. Both the clear water **44** of the thickener **41** and the filtrate **45** of the filter **42** are recirculated **35** to the stirred pond **34**.

The non-magnetic fraction **46** containing the copper and other non-magnetic materials is carried to a flotation step **47**, wherein silica and other inerts such as silicates present in conventional form are floated, for example, at pH between 10 to 10,5 employing conventional collectors and foams, such as dodecylammonium acetate and potassium nitrate ($KNO_3$) and with a flotation time of 5 to 8 minutes to generate a pulp **48**, which is thickened in a conventional thickener **49**. The low flow **50** thereof is brought to a conventional filtering step **51** to generate a concentrate of silica and other sterile **52** for sale, for example, as copper flux.

The final tail (pulp) **55** generated in the flotation step **47** contains virtually all of the copper and noble metals such as fine metallic particles, which are thickened in a conventional thickener **56**, and the low flow **57** is brought to a conventional filtering step **58**. The copper metal check is washed with fresh water **77** in the filter, and the final check of copper and noble metals **59** is brought to storage **60** from where it is loaded **61** to a conventional smelting furnace **62** such as an electric induction furnace, to thus have copper metal **63** equivalent to the blister copper together with the noble metals dissolved therein, for subsequent conventional electrolytic refining.

Both the clear water **67** and **54** of the thickeners **49** and **56** and the filtrate **53** and **68** of the filters **51** and **58** are recirculated to the process **35**, to the pond **34**.

Any slag that may be formed **64** in the smelting stage **62** is cooled and ground in a conventional milling equipment **65** and recirculated **66** to the roasting reactor **3** to recover the copper contained therein. If zinc has not been reduced, it will be contained in this slag **64** as oxide (ZnO) which can be recovered by leaching the slag in conventional form, for example, with a dilute solution of sulfuric acid and then electrodepositing the zinc therefrom.

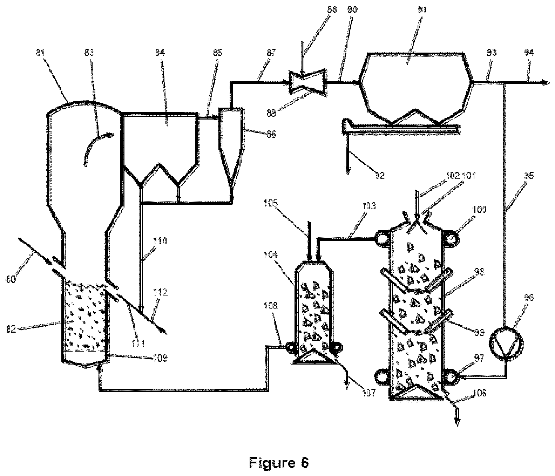

The step of reducing the oxidized calcines **15** generated in the reactor **3** can also be carried out in a gas fluidized bed reactor containing carbon monoxide (CO) generated externally in a carburetor. The schematic diagram of this technological alternative is shown in Figure 6.

In this technological alternative, the oxidized calcine **80** coming from the roasting reactor is fed to a conventional fluidized bed reactor **81**, in which in the reaction bed **82** the reactions described above Nos. (8) to (11) occur. The reaction gases and the entrained solid **83** pass to a conventional heat recovery boiler **84** to lower the gas temperature to 350 - 400°C and recover heat as process steam. The solid collected goes to process **110**. The gases **85** are then cleaned in one or more hot cyclones **86** where most of the solid entrained by the gases is separated and this is joined with the separated solid in the boiler **84** to bring it to process **110** together with the calcine **111** discharging from the reactor **81**. The mixture **112** of hot calcine **111** and powders **110** discharges into a stirred pond with water, just like the pond **34** described in Figure 1. The rest of the calcine process is equal to that described above.

The hot gases **87**, over 300°C, are cooled with cold air **88** in a conventional gas mixer **89** such as in Venturi to oxidize and condense zinc oxide (ZnO) according to reaction (12). The gases containing zinc oxide are taken **90** to a conventional bag filter **91** where zinc oxide (ZnO) **92** is recovered for commercialization.

The exhaust gases **93** of the bag filter **91**, a part is discarded **94** into the atmosphere to maintain the oxygen balance in the system. The remainder **95** is compressed with a conventional compressor **96** and brought to a conventional carburizing equipment or carburetor **98** fed with metallurgical coke coal **102,** which is fed to the upper part **101** of the carburetor **98,** which operates at 700 - 800°C to generate the CO formation reaction (*Bouduard* reaction) according to:

$$C_{(s)} + CO_{2(g)} = 2CO_{(g)} \qquad (13)$$

This reaction is endothermic and requires heat which is supplied by arc electrodes **99** or other conventional means. The gas containing oxygen, ($O_2$), nitrogen ($N_2$) and carbon dioxide ($CO_2$) enters the lower part **97** of the carburetor **98** and exits its upper part **100** with virtually only carbon monoxide (CO) and nitrogen ($N_2$), since oxygen reacts with the coke coal to produce carbon monoxide (CO) according to the reaction:

$$2C_{(s)} + O_{2(g)} = 2CO_{(g)} \qquad (14)$$

The ashes from the coke coal **106** discharges through the lower part of the carburizing reactor **98.**

The hot gas **103** exiting the upper part **100** of the carburetor **98** is brought to a sulfur capture reactor or desulphurizer **104** in the event that the coke coal contains sulfur, which would contaminate the calcine **112** generated. The desulphurizer is fed with limestone ($CaCO_3$) **105,** which over 700°C reacts with the gaseous sulfur generated in the carburetor **98** according to:

$$2CaCO_{3(s)} + S_{2(g)} = 2CaS_{(s)} + 2CO_{2(g)} + O_{2(g)} \qquad (15)$$

The oxygen generated oxidizes the CO of the gas to $CO_2$, but because the sulfur present in the coke coal **102** does not always exceed 0,5%, the reaction (15) occurs to a very limited extent. Discharge **107** from desulphurizer **104** can be discarded.

The clean gas with carbon monoxide (CO) and a small amount of $CO_2$ and free of sulfur **108** is injected into the lower part **109** of the fluidized bed reduction reactor **81** to reduce the oxidized calcine according to what is explained above.

In addition to this alternative, the carbon monoxide (CO) reducing gas can be replaced by hydrogen ($H_2$). The advantage of using hydrogen ($H_2$) as a reducer is its generation external to the plant and that it can be injected directly into the reactor by mixing it with an inert gas such as nitrogen, since the reactions are pure and very violent, so that it can be diluted to 10 - 20% by volume. In addition, only water is generated as a product of the reduction reactions, which can be reused. Reactions that occur with hydrogen are as follows:

$$CuO_{(s)} + H_{2(g)} = Cu_{(s)} + H_2O_{(g)} \qquad (16)$$

$$3Fe_2O_{3(s)} + H_{2(g)} = 2Fe_3O_{4(s)} + H_2O_{(g)} \qquad (17)$$

$$3CuO \cdot Fe_2O_{3(s)} + 4H_{2(g)} = 3Cu_{(s)} + 2Fe_3O_{4(s)} + 4H_2O_{(g)} \qquad (18)$$

$$ZnO_{(s)} + H_{2(g)} = Zn_{(g)} + H_2O_{(g)} \qquad (19)$$

As can be seen in Figure 4, the reduction of oxidized copper and iron calcines with hydrogen is possible throughout the temperature range considered, however, the reduction of zinc oxide requires a temperature over 1200°C, which is above the melting point of some phases present, so that if the copper concentrate contains zinc, the zinc oxide formed will end up as such together with the copper metal, from where it can be recovered from the slag by smelting copper and noble metals. Zinc oxide is readily soluble in dilute sulfuric acid, as indicated above.

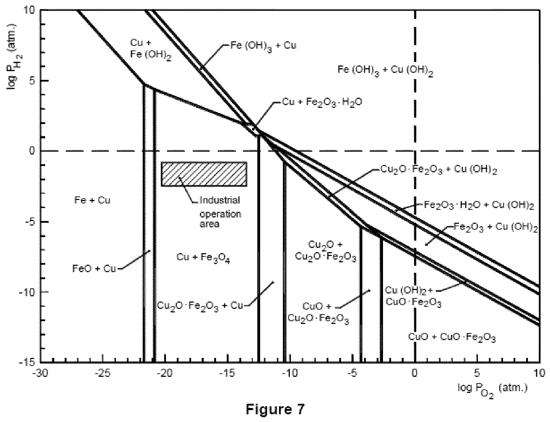

Figure 7 shows the diagram of phase stability Cu-Fe-$H_2$-$O_2$ at 700°C as a function of the partial pressure of hydrogen ($H_2$) and partial pressure of oxygen ($O_2$), indicating the stability area of the stable phases of copper metal and magnetite ($Fe_3O_4$).

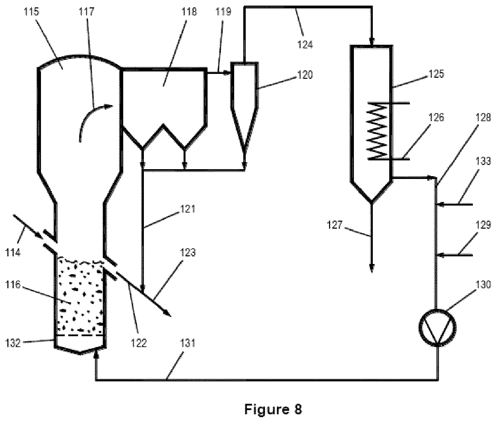

The process diagram of this technological alternative is shown in Figure 8. The oxidized calcine **114** coming from the oxidizing roasting reactor is continuously fed to a conventional fluidized bed reactor **115,** in which in its bed **116** the reduction reactions with hydrogen ($H_2$) N°s (16) to (19) occur at a temperature between 400 to 900°C, preferably between 600 to 800°C with a reaction time of 0,5 to 12 h, preferably between 4 to 6 h, and which is fluidized with a gas containing between 1 to 90% by volume of hydrogen, preferably between 10 to 20% by volume and the rest of the nitrogen gas ($N_2$) or other inert gas. The reaction time of the solid in the bed **116** ranges from 2 to 8 h, preferably between 4 and 6 h.

The hot gases **117** also entraining solid particles are cooled to 350 - 400°C in a conventional boiler **118** generating steam for industrial use and the gases **119** are then cleaned in one or more conventional hot cyclones **120**. The clean gas **124** is then cooled in a conventional condenser **125** cooled by water **126** where it condenses the water **127** generated in reactions (16) to (18), which can be used as industrial water.

More fresh hydrogen ($H_2$) **133** and nitrogen ($N_2$) **129** are added to the outlet gas **128** of the condenser **125,** if necessary, and compressed with a conventional compressor **130** and injected **131** into the bottom **132** of the fluidized bed reactor 115. In this technological option there is no emission of gases to the environment and the gas is continuously recirculated in the process and the only liquid product is recoverable water.

The powders **121** separated in the boiler **118** and cyclones **120** are joined with the calcine **122** and discharge **123** to a pond equal to the pond **34** described in Figure 1. The rest of the process is equal to that described in Figure 1 for reduced calcines.

**Application Example**

A copper concentrate with the chemical composition indicated in Table 1 and mineralogical of Table 2 was toasted in a continuous fluidized laboratory bed reactor at 800°C ($\pm$10°C) with a mean reaction time of 4h at a feed rate of 5 kg/h and an excess of 100% of the air over the stoichiometric required by reactions (1) to (5). The particle size of the concentrate was 80%-100 mesh.

Table 1. Chemical composition of the copper concentrate used

| Element | Cu | Fe | S | $SiO_2$ | Others |
|---------|------|------|------|---------|--------|
| % | 28.2 | 22.3 | 34.1 | 8.9 | 6.5 |

Table 2. Mineralogical composition of the copper concentrate used

| Compound | Chalcopyrite ($CuFeS_2$) | Chalcocite ($Cu_2S$) | Covellite ($CuS$) | Bornite ($Cu_5FeS_4$) | Pyrite ($FeS_2$) | Silica ($SiO_2$) | Others - |
|----------|--------------------------|----------------------|-------------------|-----------------------|------------------|------------------|----------|
| % | 19.9 | 24.3 | 1.0 | 3.2 | 31.2 | 8.9 | 9.8 |

The calcine along with the collected powders was cooled to 20°C and analyzed chemically and mineralogically. The composition of this is shown in Tables 3 and 4.

Table 3. Chemical composition of the obtained calcine

| Element | Cu | Fe | S | $SiO_2$ | Others |
|---------|------|------|------|---------|--------|
| % | 32.4 | 24.6 | 0.31 | 9.9 | 31.8 |

Table 4. Mineralogical composition of the obtained calcine

| Element | Cuprite (CuO) | Hematite $Fe_2O_3$ | Copper ferrite ($CuO \cdot Fe_2O_3$) | Silica $SiO_2$ | Others - |
|---------|---------------|--------------------|--------------------------------------|----------------|----------|
| % | 41.6 | 24.1 | 17.2 | 12.8 | 3.3 |

In the roasting step, 99.3% of the sulfur contained in the initial concentrate was removed to the $SO_2$ form. The composition of the reactor exhaust gas was 12.5 to 13% by volume of $SO_2$.

The calcine was then continuously reduced in a fluidized laboratory bed furnace by employing a mixture of $CO+CO_2$ in $CO/(CO+CO_2)$ = 0.5 to 800°C for a mean reaction time of 2 h, feeding at a rate of 4 kg/h, and employing 20% of excess CO over the stoichiometric required by reactions (8) to (10).

The calcine was cooled directly in water to 30°C and analyzed chemically and mineralogically. The results are seen in Table 5.

Table 5. Chemical composition of reduced calcine

| Element | Metallic copper (Cu) | Magnetite ($Fe_3O_4$) | Total Sulfur (S) | Silica ($SiO_2$) | Others - |
|---------|----------------------|------------------------|------------------|------------------|----------|
| % | 48.7 | 34.2 | 0.03 | 14.8 | 0.3 |

The calcine pulp with 25% solid was magnetically concentrated in a magnetic laboratory drum system in four stages with 400 Gauss/cm each, portraying the intermediate tails generated (in each stage) in three stages. The final magnetite concentrate contained 94.2% of magnetite ($Fe_3O_4$), 4% of silica ($SiO_2$) and 0.8% of others, with 0.1% of copper trapped.

The final tail (copper concentrate) contained 74.1% of metallic copper and 24.7% of silica, which was floated in three cleaning stages using 0.25 g/l of dodecylammonium and 0.05 g/l of potassium nitrate at pH 10 and removing 90.2% of the silica and other silicates and generating a concentrate of 92.9% of silica and 0.08% of copper.

The final tail contained the metallic copper, with a law of 98.9% of copper, 0.8% of silica and 0.8% of magnetite, which was melted in an electric furnace at 1200°C to have an equivalent to the blister copper. The overall recovery of copper from concentrate to final copper metal was 98.7%.

**Claims**

1.  Process for producing copper metal from copper concentrates without generating waste **CHARACTERIZED in that** it comprises at least the following steps:

    a. oxidation reaction: the dry or wet copper concentrate (1) up to 12% of humidity is fed to a fluidized bed roasting reactor (3) at 650 - 900°C using air (4) or oxygen-enriched air between 21 to 100% by volume of oxygen and an excess of oxygen with respect to the required stoichiometric between 0.001 to 200%, and with a reaction time of 2 - 12 h;

    b. cleaning and cooling of the gases: the gases (6) generated in the roasting reactor are cooled to 400 - 450°C in a boiler (7) and cleaned in conventional cyclones (9) and then cooled to 300 - 320°C in an evaporative chamber (10), where the cleaning of the outlet gases (12) is done in an electrostatic precipitator (19), and where the powder of the precipitator (8) is returned to the reactor (3) and the clean gases (21) are washed in a gas washer (22), and finally sent to an acid plant to produce sulfuric acid;

    c. feeding to the reduction reactor: the hot discharge oxidized calcine (14) from the roasting reactor (3) and together with the powders (13) generated in the boiler (7) and in the cyclones (9), are joined and fed to the reduction reactor (18), adding a reduction agent (16) in an amount equal to or up to 200% excess of the stoichiometric, operating at 500 - 950°C with a reaction time between 2 to 6 h, using coal, coke coal or carbon monoxide with an excess between 0.001 to 200% of the stoichiometric required for the reduction reactions;

    d. cleaning of the gases: the exhaust gases (30) from the reduction reactor (18) are cleaned in one or more conventional cyclones (31);

    e. discharging the calcines and hot powders into water: the reduced calcine in the reactor (18) together with the powders (32) separated into cyclones (31), discharges and mixes directly in a pond (34) with stirred water operating at a liquid temperature between 20 to 60°C, where the fracturing and release of any metallic copper particles trapped in the magnetite occurs, where the generated steam is removed (36) to maintain the water temperature, and where the pulp (37) is wet ground in a conventional mill (69) to complete the release of the metallic copper from the magnetite;

    f. magnetic separation: the pulp of calcine and water generated (38) in the stirred pond (34) or of the mill (69) is brought to a magnetic separation system in conventional wet drums (39) of one or more stages and with a field density between 18,000 to 20,000 Gauss in which the magnetite is separated from the non-magnetic rest, obtaining a high magnetite law concentrate (40);

    g. thickening and filtering of the magnetic fraction: the magnetite concentrate (4) is sent to a conventional thickening step (41), wherein the low flow of the thickener (80) is fed to a conventional filtering step (42) to obtain the final check of magnetite concentrate (43); and wherein clear water (44) of the thickener (41) as filtering (45) of the filter (42) is recirculated to the stirred pond (34);

    h. flotation of the silica and inerts: the non-magnetic fraction (46) containing the copper and other non-magnetic materials is sent to a flotation step (47), where the silica and inerts are floated as silicates at pH between 10 to 10,5 employing conventional collectors and foams with a flotation time of 5 to 8 minutes to generate a pulp (48);

    i. thickening and filtration of silica and inerts: the pulp 48 is thickened in a conventional thickener 49, wherein the low flow 50 is brought to a filtering step 51 to generate a sterile silica concentrate 52;

    j. thickening and filtration of the final concentrate containing the copper metal and noble metals: the final pulp (55) generated in the flotation step (47) is thickened in a conventional thickener (56) and the low flow (57) is sent to a conventional filtering step (58), and wherein the metallic copper check is washed with fresh water (77) in the filter, and the final check of copper and noble metals (59) is brought to stockpile (60);

    k. smelting of the final concentrate of copper and noble metals: from the stockpile (60) it is loaded to a conventional smelting furnace (62) in order to obtain metallic copper (63) together with the noble metals dissolved therein, for subsequent conventional electrolytic refining;

l. recirculation of the ground smelting slag to the roasting reactor: the slag that is formed (64) in the smelting stage (62) is cooled and ground in a conventional milling equipment (65) and recirculated (66) to the roasting reactor (3) to recover the copper contained therein.

2. - A process for producing copper metal from copper concentrates without generating waste according to claim 1, **CHARACTERIZED in that**, preferably, the roasting reactor operates at 700 to 850°C.

3. - A process for producing copper metal from copper concentrates without generating waste according to claim 1, **CHARACTERIZED in that**, preferably, in the roasting reactor the reaction time is from 4 to 8h.

4. - A process for producing copper metal from copper concentrates without generating waste according to claim 1, **CHARACTERIZED in that**, preferably, the excess air in the roasting reactor ranges between 50 and 100%.

5. - A process for producing copper metal from copper concentrates without generating waste according to claim 1, **CHARACTERIZED in that** the molybdenum present in the copper concentrate is recovered from the powders of the electrostatic precipitator of the oxidizing roasting stage by leaching the powders with a solution of ammonium hydroxide, in conventional form.

6. - A process for producing copper metal from copper concentrates without generating waste according to claim 1, **CHARACTERIZED in that** in the reduction reactor the reducing agent is coke coal or carbon monoxide.

7. - A process for producing copper metal from copper concentrates without generating waste according to claim 1, **CHARACTERIZED in that** in the reduction reactor the reducing agent is preferably fed between 0.001 to 100% excess.

8. - A process for producing copper metal from copper concentrates without generating waste according to claim 1, **CHARACTERIZED in that** the reduction reactor is a rotary kiln.

9. - A process for producing copper metal from copper concentrates without generating waste according to claim 1, **CHARACTERIZED in that** the reduction reactor preferably operates at 700 to 800°C.

10. - A process for producing copper metal from copper concentrates without generating waste according to claim 1, **CHARACTERIZED in that**, optionally, if the copper concentrate contains zinc, the reduction reactor operates in a zone at temperature over 1000°C to produce the reduction reaction.

11. - A process for producing copper metal from copper concentrates without generating waste according to claims 1 and 10, **CHARACTERIZED in that** the gaseous zinc generated in the reduction reactor is re-oxidized with cold air in a gas mixer to generate zinc oxide.

12. - A process for producing copper metal from copper concentrates without generating waste according to claim 1, **CHARACTERIZED in that** in the reduction stage it is carried out with carbon monoxide gas generated externally in a conventional carburetor and removing the sulfur, if any, in conventional form in a limestone desulfurizer.

13. - A process for producing copper metal from copper concentrates without generating waste according to claim 1, **CHARACTERIZED in that**, optionally, the reduction step is carried out using gas containing hydrogen between 10 to 20% volume, at a temperature between 600 to 950°C.

14. - A process for producing copper metal from copper concentrates without generating waste according to claim 11, **CHARACTERIZED in that**, the gases containing zinc oxide are cleaned in a bag filter to recover zinc oxide and the clean gases are vented to the atmosphere.

15. - A process for producing copper metal from copper concentrates without generating waste according to claim 1, **CHARACTERIZED in that**, in the flotation stage, collectors and foaming agents such as dodecylammonium acetate and potassium nitrate are used.

16. - A process for producing copper metal from copper concentrates without generating waste according to claim 1, **CHARACTERIZED in that** in the smelting stage of the final concentrate of copper and noble metals, the furnace is of electric induction.

17. - A process for producing copper metal from copper concentrates without generating waste according to claim 1, **CHARACTERIZED in that**, optionally, the oxidation reaction step is carried out in a gas fluidized bed reactor containing carbon monoxide generated externally in a carburetor.

18. - A process for producing copper metal from copper concentrates without generating waste according to claims 1 and 17, **CHARACTERIZED in that** the oxidized calcine (80) from the roasting reactor is fed to a fluidized bed reactor (81), where the reaction gases and the entrained solid (83) pass to a heat recovery boiler (84) to lower the temperature of the gas to 350 - 400°C and recover heat as process steam; where the gases (85) are cleaned in one or more hot cyclones (86) where most of the solid entrained by the gases is separated and this is joined with the separated solid in the boiler (84) to bring it to process (110) together with the calcine (111) that discharges from the reactor (81); and where the mixture 112 of hot calcine (111) and powders (110) discharges in a stirred pond with water.

19. - A process for producing copper metal from copper concentrates without generating waste according to claim 17, **CHARACTERIZED in that** the hot gases (87), over 300°C, are cooled with cold air (88) in a gas mixer (89) to oxidize and condense the zinc oxide and the gases containing the zinc oxide are taken (90) to a bag filter (91) where the zinc oxide (92) is recovered; wherein the output gases (93) of the bag filter (91), a part is discarded (94) the atmosphere and the rest (95) is compressed with a compressor (96) and brought to a carburizing equipment (98) fed with metallurgical coke coal (102), which is fed to the carburetor (98) operating at 700 - 800°C and where the heat is supplied by arc electrodes (99); the hot gas (103) exiting the carburetor (98) is brought to a sulfur capture reactor or desulfurizer (104); where the desulfurizer is fed with limestone (105); the clean gas with carbon monoxide and a small amount of $CO_2$ and sulfur-free (108) is injected into the fluidized bed reduction reactor (81) to reduce oxidized calcine.

20. - A process for producing copper metal from copper concentrates without generating waste according to claim 1, **CHARACTERIZED in that**, optionally, hydrogen is used as a reducing gas.

21. - A process for producing metallic copper from copper concentrates without generating waste according to claims 1 and 20, **CHARACTERIZED in that** the oxidized calcine (114) from the oxidizing roasting reactor is fed to a fluidized bed reactor (115), in which in its bed (116) the reduction reactions with hydrogen at a temperature between 400 to 900°C with a reaction time of 0,5 to 12 h occur, and then it is fluidized with a gas containing between 1 to 90% by volume of hydrogen and the rest of the gas nitrogen or other inert gas; and where the hot gases (117) also entraining solid particles are cooled to 350 - 400°C in a conventional boiler (118) generating steam for industrial use, and the gases (119) are then cleaned in one or more conventional hot cyclones (120); where the clean gas (124) is cooled in a condenser (125); and where in the outlet gas (128) of the condenser (125) more fresh hydrogen (133) and nitrogen (129) are added, and it is compressed with a conventional compressor (130) and injected (131) at the lower part (132) of the fluidized bed reactor 115; and where the powders (121) separated in the boiler (118) and cyclones (120) are joined with the calcine (122) and discharged (123) to a pond.

22. - A process for producing copper metal from copper concentrates without generating waste according to claim 21, **CHARACTERIZED in that** the reduction reactions with hydrogen preferably occur between 600 to 800°C and with a reaction time between 4 to 6 h.

Figure 1

Figure 2

Figura 3

Figure 4

Figure 5

Figure 6

Figure 7

Figure 8

**EP 4 059 884 A1**

**INTERNATIONAL SEARCH REPORT**

| International application No. |
|---|
| PCT/CL2020/050139 |

| A. CLASSIFICATION OF SUBJECT MATTER |
|---|
| (CIP) C01B17/52, C22B1/10, C22B15/00 (2021.01) |
| According to International Patent Classification (IPC) or to both national classification and IPC |

| B. FIELDS SEARCHED |
|---|
| Minimum documentation searched (classification system followed by classification symbols) |
| (CIP) C01B17/52, C22B1/10, C22B15/00  (CPC) C01B17/52, C22B1/10, B15/00, B15/0015 |
| Documentation searched other than minimum documentation to the extent that such documents are included in the fields searched |
| Electronic data base consulted during the international search (name of data base and, where practicable, search terms used) |
| Derwent, Esp@cenet, Patenscope, Google, Google Patent, INAPI |

| C. DOCUMENTS CONSIDERED TO BE RELEVANT |
|---|

| Category* | Citation of document, with indication, where appropriate, of the relevant passages | Relevant to claim No. |
|---|---|---|
| Y | GB731527 (A) (FREDERICK JOHN TROTTER; HUNTINGTON HEBERLEIN AND COMPANY) 08-06-1955 See the whole document | 1-22 |
| Y | GARCIA OPAZO V., Estudio Preliminar de laboratorio para el Tratamiento de un Concentrado de Cobre  Alto en Arsénico mediante Tostación Sulfatante;  Tesis de Ingeniero Civil  Metalúrgico Universidad de Concepción [On line] (Agosto 2017) [Recovered on 01/02/2021)] URL: http://repositorio.udec.cl/jspui/handle/11594/2893; Tesis_Estudio_Preliminar_de_laboratorio.pdf See the whole document, in particular, Chapter 2, Section 2.2., Figure 2, "Tostación oxidante de concentrados de cobre" and section 3. | 1-22 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 FEB 2021 (01.02.2021) | 05 FEB 2021 (05.02.2021) |

| Name and mailing address of the ISA/ | Authorized officer |
|---|---|
| ISA/CL | |
| Facsimile No. | Telephone No. |

Form PCT/ISA/210 (second sheet) (January 2015)

**INTERNATIONAL SEARCH REPORT**

International application No.

PCT/CL2020/050139

C (Continuation).    DOCUMENTS CONSIDERED TO BE RELEVANT

| Category* | Citation of document, with indication, where appropriate, of the relevant passages | Relevant to claim No. |
|---|---|---|
| A | WO2016180624 (A1) (OUTOTEC FINLAND OY) 17-11-2016<br>See the whole document | |
| A | RAMBIYANA, R.I. Fire and brimstone: The roasting of a Merensky PGM concentrate. The Journal of The Southern African Institute of Mining and Metallurgy (2015), 115:507-514<br>DOI: 10.13140/RG.2.1.1673.5843<br>See the whole document | |
| A | KE-QING Li et al. Recovery of iron from copper slag by deep reduction and magnetic beneficiation.<br>International Journal of Minerals, Metallurgy and Materials (2013): 1035-1041<br>DOI: 10.1007/s12613-013-0831-3<br>See the whole document | |

Form PCT/ISA/210 (continuation of second sheet) (January 2015)

INTERNATIONAL SEARCH REPORT
Information on patent family members

| International application No. |
| --- |
| PCT/CL2020/050139 |

| | | | |
| --- | --- | --- | --- |
| GB731527 (A) | 08-06-1955 | None | |
| WO2016180624 (A1) | 17-11-2016 | AU2016259652 (A1) | 23-11-2017 |
| | | AU2016259652 (B2) | 23-11-2017 |
| | | CA2983773 (A1) | 17-11-2016 |
| | | CL2017002824 (A1) | 02-04-2018 |
| | | CN107810282 (A) | 16-03-2018 |
| | | CN107810282 (B) | 16-03-2018 |
| | | DE102015107435 (A1) | 17-11-2016 |
| | | EA032531 (B1) | 29-06-2018 |
| | | EA201792200 (A1) | 29-06-2018 |
| | | EP3294915 (A1) | 21-03-2018 |
| | | EP3294915 (B1) | 21-03-2018 |
| | | KR101995658 (B1) | 20-12-2017 |
| | | KR20170140357 (A) | 20-12-2017 |
| | | MX2017014360 (A) | 01-03-2018 |
| | | PL3294915 (T3) | 30-08-2019 |
| | | RS58754 (B1) | 28-06-2019 |
| | | SI3294915 (T1) | 28-06-2019 |
| | | TR201906997 (T4) | 21-06-2019 |
| | | ES2726718 (T3) | 08-10-2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4072507 A

**Non-patent literature cited in the description**

- **WADE H.H. ; SCHULZ, N.F.** Magnetic roasting of iron ones. *Min. Engr.,* 1960, vol. 11, 1161-1165

- **G. UWADIALE.** Magnetizing roasting of iron ores. *Min. Processes and Extr. Metallurgy Review,* 1992, vol. 11 (1,2), 68-70